# FASCICULE DE BREVET EUROPEEN

(11) **EP 0 734 605 B1**
(45) Date de publication et mention de la délivrance du brevet: **14.07.1999**
(21) Numéro de dépôt: 95935489.5
(22) Date de dépôt: 13.10.1995
(51) Int. Cl.: H02J 7/00

(54) **PROCEDE DE REGULATION DE LA CHARGE D'UN ENSEMBLE ACCUMULATEUR ELECTRIQUE ET AGENCEMENT METTANT EN OEUVRE CE PROCEDE**
VERFAHREN ZUR REGELUNG DER LADUNG EINES ELEKTRISCHEN AKKUMULATORSYSTEMES UND VORRICHTUNG ZUR DURCHFÜHRUNG DIESES VERFAHRENS
ELECTRICAL STORAGE BATTERY CHARGING CONTROL METHOD AND ARRANGEMENT THEREFOR

(30) Priorité: 18.10.1994 FR 9412421
(43) Date de publication de la demande: 02.10.1996
(73) Titulaire: ALCATEL, 75008 Paris (FR)
(72) Inventeur: PERELLE, Michel, F-37210 Parcay-Meslay (FR)
(74) Mandataire: Schaub, Bernard
(86) Numéro de dépôt international: FR9501348
(87) Numéro de publication internationale: WO9612333

(56) Documents cités:
- EP-A- 0 498 679
- US-A- 4 238 721
- US-A- 5 258 244
- IEEE TRANSACTIONS ON INDUSTRY APPLICATIONS, vol.29, no.2, Mars 1993, NEW YORK US pages 363 - 367 D.HOPKINS ET AL 'DYNAMIC EQUALIZATION DURING CHARGING OF SERIAL ENERGY STORAGE ELEMENTS'
- 13TH INTERNATIONAL TELECOMMUNICATIONS ENERGY CONFERENCE, 5 Novembre 1991, JAPAN pages 196 - 201 B.LINDEMARK 'INDIVIDUAL CELLVOLTAGE EQUALIZERS (ICE) FOR RELIABLE BATTERY PERFORMANCE'

## Description

L'invention concerne un procédé de régulation de la charge d'un ensemble de type accumulateur électrique et un agencement pour la mise en oeuvre de ce procédé.

Comme il est connu un tel ensemble est classiquement composé d'une pluralité de cellules qui sont identiquement constituées d'un ou de plusieurs éléments électrochimiques eux-mêmes prévus identiques et qui sont connectées en série par leurs bornes d'alimentation respectives.

La charge d'un tel ensemble au moyen d'un chargeur connecté aux bornes d'extrémité de l'ensemble, ne se produit généralement pas de manière uniforme pour toutes les cellules. En effet, les caractéristiques électriques et chimiques des cellules d'un même ensemble varient au cours du temps et en fonction des conditions d'exploitation de l'ensemble. Ceci se traduit notamment par le fait que les différentes cellules d'un même ensemble n'atteignent pas simultanément leurs pleines charges respectives lors des recharges.

Il est donc connu de maintenir un courant en fin de charge d'un ensemble comportant une pluralité de cellules afin d'assurer une charge complète de toutes les cellules y compris de celles qui sont les plus lentes à se recharger. Toutefois une telle solution n'est pas sans inconvénient, car les cellules ayant atteint les premières leur charge complète sont inutilement traversées par le courant de charge qui les échauffe et qui risque d'entraîner des dégagements gazeux et éventuellement des surpressions dans le cas de cellules composées d'éléments scellés.

Une solution connue pour remédier à ceci consiste à réguler le courant de charge de chaque cellule en fonction de la tension présente à ses bornes au moyen d'un circuit permettant de dériver progressivement une partie de plus en plus grande de ce courant hors de la cellule, en fin de charge de cellule, à partir d'un seuil de la tension qui traduit cette charge. Toutefois une telle solution n'est pas totalement satisfaisante dans le cas d'un ensemble de grande capacité destiné à fournir des courants de forte intensité comme le sont par exemple les ensembles destinés aux véhicules électriquement alimentés en énergie pour leur propulsion. En effet les courants nécessaires à la recharge de tels ensembles sont susceptibles d'être eux aussi de forte intensité, ce qui conduit à ce que les courants à dériver soient eux aussi d'intensité élevée et que les puissances dissipées à des fins de régulation en fin de charge soient importantes.

L'invention propose donc un procédé de régulation du courant fourni par un chargeur aux bornes d'extrémité d'un ensemble de type accumulateur électrique qui est composé d'une pluralité de cellules, identiquement composées d'un ou de plusieurs éléments électrochimiques et connectées en série par leurs bornes d'alimentation respectives, chaque cellule étant munie d'une interface individuelle comportant des moyens pour mesurer la tension présente entre ses bornes d'alimentation, des moyens pour dériver une partie du courant de charge fourni à cette cellule, lorsque la tension mesurée est supérieure à une valeur de seuil, ainsi que des moyens pour fournir des signaux de mesure à destination d'une unité de commande du chargeur.

Suivant l'invention, le procédé prévoit une réduction progressive du courant de charge par l'unité de commande du chargeur à l'ensemble, lorsqu'est reçu d'au moins l'une des interfaces un signal de mesure de courant représentatif du courant de charge dérivé au niveau de l'interface considérée, tant que le courant de charge fourni à l'ensemble est supérieur à la somme des courants susceptibles d'être dérivés par les interfaces, le courant de charge étant ensuite maintenu à la même intensité jusqu'à réception de signaux de mesure de courant traduisant un fonctionnement des moyens de dérivation pour toutes les interfaces de cellules de l'ensemble.

L'invention propose aussi un agencement associant, au moins temporairement, un chargeur à un ensemble de type accumulateur électrique, aux bornes d'extrémité duquel ce chargeur se raccorde, l'ensemble étant composé d'une pluralité de cellules qui comprennent identiquement un ou plusieurs éléments électrochimiques et qui sont connectées en série par leurs bornes d'alimentations respectives.

Chaque cellule de l'ensemble y est prévue munie d'une interface individuelle qui comporte des moyens pour mesurer la tension présente entre ses bornes d'alimentation, des moyens pour dériver une partie du courant de charge fourni à la cellule, lorsque la tension mesurée est supérieure à une valeur de seuil, ainsi que des moyens pour fournir des signaux de mesure à destination d'une unité de commande du chargeur.

Suivant l'invention, les moyens fournisseurs de signaux de mesure de chaque interface transmettent un signal en courant représentatif du courant de charge dérivé au niveau de l'interface considérée.

Selon une autre caractéristique de l'invention, l'agencement comporte des moyens d'horloge permettant d'activer successivement et périodiquement les moyens fournisseurs de signaux de mesure de chacune des interfaces et en ce que ces moyens fournissent leurs signaux de mesure de courant respectifs à un même transducteur servant d'interface vis-à-vis de l'unité de commande du chargeur.

L'invention, ses caractéristiques et ses avantages sont précisés dans la description qui suit en liaison avec les figures évoquées ci-dessous.

La figure 1 présente un schéma d'un agencement de charge pour ensemble accumulateur électrique, selon l'invention.

La figure 2 présente un chronogramme relatif au procédé de charge selon l'invention.

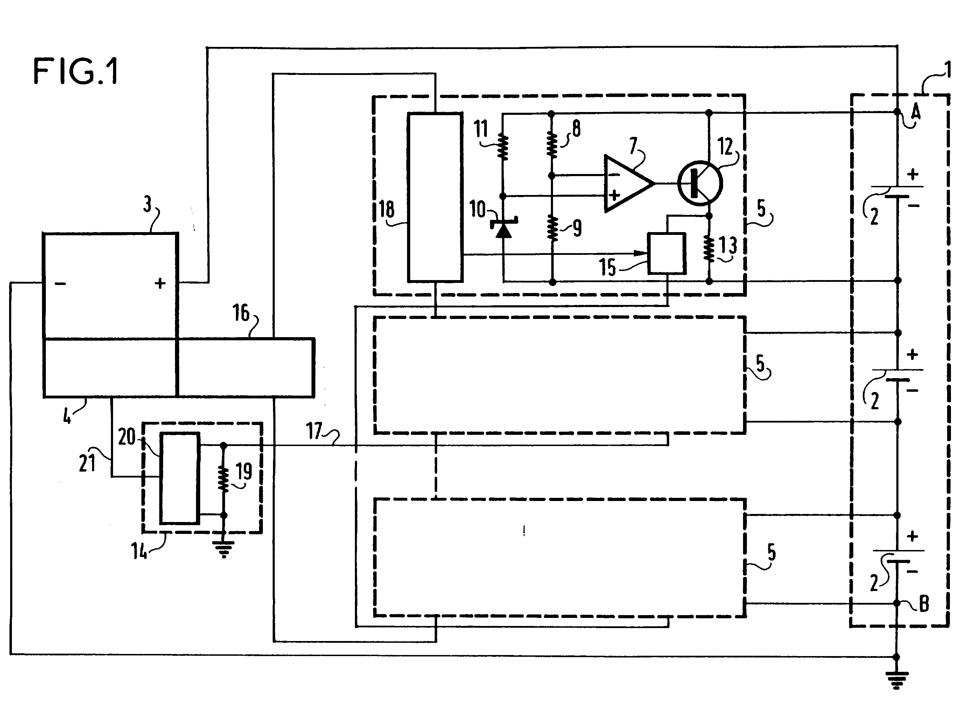

L'agencement proposé en figure 1 montre un ensemble modulaire 1, de type accumulateur électrique, qui est supposé composé d'une pluralité de cellules 2, identiques, connectées en série par leurs bornes d'alimentation respectives qui sont référencées "+" et "-".

Toutes les cellules y sont identiquement composées d'un ou de plusieurs éléments électrochimiques eux aussi pratiquement identiques.

L'ensemble 1 est susceptible d'être raccordé, au moins temporairement, à un chargeur 3 aux bornes d'alimentation duquel l'ensemble est relié par des bornes d'extrémité référencées A et B. Le chargeur est susceptible d'être d'un type connu, il est supposé doté d'une unité de commande 4 permettant notamment de régler l'intensité du courant de charge I qu'il fournit à l'ensemble 1. L'unité de commande 4 est par exemple organisée autour d'un microcontrôleur non représenté qui comporte des ports d'entrée-sortie, notamment pour recevoir des signaux de mesure permettant de piloter le chargeur en fonction de l'évolution de l'état de charge de l'ensemble et pour transmettre des signaux de commande au chargeur proprement dit. Ces divers éléments sont connus de l'homme de métier et ils ne seront donc pas développés ici. Dans la réalisation envisagée, une interface individuelle 5 est affectée à chaque cellule 2 de l'ensemble 1 et elle est connectée aux bornes d'alimentation "+", "-" de la cellule 2 à laquelle elle est affectée.

Chaque interface 5 comporte notamment des moyens lui permettant de mesurer la tension V présente entre les bornes d'alimentation "+", "-" de la cellule 2 à laquelle elle est associée. Ces moyens de mesure sont par exemple constitués au moyen d'un amplificateur différentiel 7, dont la borne inverseuse est reliée au point commun aux deux résistances 8 et 9 d'un pont diviseur connecté entre les bornes "+", "-" de la cellule et dont la borne non-inverseuse est reliée au point commun à un montage comprenant une diode Zener 10 et une résistance 11 reliées en série entre les bornes "-" et "+" évoquées ci-dessus, de manière que la sortie de l'amplificateur fournisse un signal de commande sur la base d'un transistor 12 lorsque la tension V mesurée aux bornes de la cellule dépasse une valeur de seuil VS fixée par la diode 10.

Le transistor 12, de type PNP, est relié à la borne "-" de la cellule par son collecteur, via une résistance 13, et à la borne "+" de cette cellule par son émetteur. Il permet de dériver une partie du courant de charge Ic fourni par le chargeur 3 à la cellule à laquelle il est affecté. Cette décharge s'effectue dans une résistance qui constitue un élément absorbeur de courant, lorsque la tension obtenue aux bornes de cette cellule dépasse la valeur de seuil VS, cette dernière étant choisie pour éviter que l'ensemble ne soit inutilement et dangereusement parcouru par un courant de charge I trop important en fin de charge.

Chaque interface 5 comporte aussi des moyens lui permettant de fournir des signaux de mesure de courant. Ces moyens fournissent ici un signal de mesure i traduisant l'existence d'un courant Id dérivé au niveau de l'interface par l'intermédiaire du transistor 12 vers la résistance 13.

Ce signal de mesure i est ici un courant transmis à un transducteur de mesure 14 de l'agencement, qui est montré relié au collecteur du transistor 12 de chacune des interfaces 5, via un commutateur de mise en communication 15 pour chaque interface. Le commutateur 15 de chaque interface est par exemple périodiquement commandé passant par l'intermédiaire de moyens d'horloge 16 de l'agencement, qui comportent par exemple un séquenceur, ici supposé associé à l'unité de commande 4 du chargeur dans laquelle ce séquenceur est éventuellement incorporé.

Dans une forme préférée de réalisation le séquenceur commande successivement les différentes interfaces 5 qui sont reliées en série entre elles par une liaison de commande commune 17 par envoi d'un train d'impulsions de commande.

Chaque interface 5 comporte des moyens d'activation 18, connus en eux-mêmes déclenchant l'envoi d'au moins un signal de mesure à réception d'une première impulsion de commande après un laps de temps minimal déterminé. Ces moyens d'activation 18 sont ici supposés agencés de manière connue en soi pour ne prendre en compte que la première impulsion de commande qu'ils reçoivent et pour transmettre la ou les éventuelles impulsions immédiatement suivantes à destination de la ou des interfaces 5 qui sont situées en aval sur la liaison 17 et auxquelles ces impulsions sont destinées.

Le transducteur de mesure 14 reçoit les signaux de mesure successivement fournis par les interfaces 5, ces signaux, ici sous forme de courant, alimentent par exemple une résistance de mesure 19 associée à un dispositif de mesure 20 qui permet par exemple de numériser et éventuellement de prétraiter les mesures effectuées avant de les transmettre à l'unité de commande 4, via une liaison 21.

En début de charge ou de recharge de l'ensemble 1 et alors que le courant I fourni par le chargeur 3 à cet ensemble 1 est maximal, comme montré par la partie I du diagramme 2A, la tension aux bornes de ces cellules augmente au cours du temps, comme montré pour une cellule en partie I du diagramme 2B, ainsi que celle aux bornes de l'ensemble.

Il arrive un moment où la tension V aux bornes d'au moins une des cellules 2 en cours de charge atteint une valeur de seuil VS à partir de laquelle une partie Id du courant de charge destiné à cette cellule est dérivé, via la liaison émetteur-collecteur du transistor 12 et la résistance 13 de l'interface 5 associée en raison de la conduction du transistor 12, comme symbolisé sur le diagramme 2C.

Cette interface fournit alors au transducteur 14, un signal de mesure i qui est constitué par prélèvement de courant au point commun au transistor 12 et à la résistance 13 et qui est prélevé lorsque le commutateur 15 est commandé passant par l'intermédiaire des moyens d'activation 18 de l'interface, ces derniers étant périodiquement déclenchés par les moyens d'horloge de l'agencement 16.

Le signal de mesure, ici d'allure impulsionnelle, est pris en compte par l'unité de commande 4, éventuellement après avoir été prétraité et numérisé au niveau du dispositif de mesure 20. Un signal de commande, tel que montré au niveau II sur le diagramme 2D, est envoyé par l'unité de commande 4 au chargeur 3, il conduit à une réduction du courant fourni par ce chargeur à l'ensemble 1.

La tension aux bornes, tant des cellules que de l'ensemble, s'abaisse en conséquence, ainsi qu'on le voit au niveau II du diagramme 2B pour la cellule déjà considérée.

Dans une forme de réalisation, cette réduction de courant est stoppée dès que les signaux de mesure obtenus des interfaces traduisent le fait qu'il n'y a plus de dérivation de courant au niveau d'aucune des interfaces 5 de cellules de l'ensemble 1, lorsque les tensions respectivement présentes entre les bornes d'alimentation de toutes les cellules prises individuellement sont toutes au-dessous de la valeur de seuil VS.

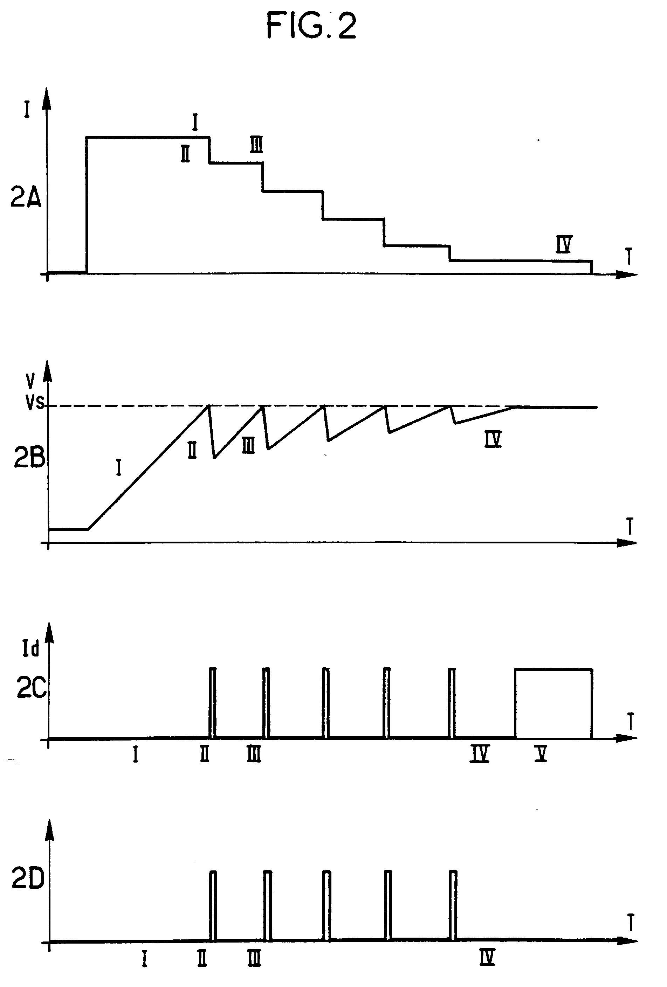

La charge des cellules se poursuit alors avec un niveau de courant correspondant à celui défini au moment où la réduction a été stoppée. Le maintien de la fourniture de ce courant de charge I à l'ensemble 1, entraîne une nouvelle augmentation progressive des tensions respectivement présentes aux bornes des cellules 2 et une phase de fonctionnement de l'ensemble 1 et du chargeur analogue à celle décrite ci-dessus. Cette nouvelle phase de fonctionnement référencée III sur les diagrammes de la figure 2 est susceptible de se répéter une ou plusieurs fois comme montré sur cette figure 2.

Vers la fin d'une opération de charge ou de recharge, une réduction du courant fourni par le chargeur amènerait ce courant à devenir inférieur à une valeur de seuil IS correspondant à la somme des courants susceptibles d'être dérivés par les interfaces.

Certaines des cellules au moins sont alors susceptibles d'être pleinement chargées et fournissent alors un signal de mesure de courant traduisant le fonctionnement de leurs moyens de dérivation respectifs. D'autres cellules nécessitent encore un complément de charge ce qui conduit à maintenir le courant fourni par le chargeur à l'ensemble, ainsi que symbolisé dans la phase référencée IV sur les diagrammes de la figure 2, et ce malgré la présence de signaux de mesure de courant qui conduisaient préalablement à une nouvelle réduction du courant de charge.

La suppression du courant de charge I, ou éventuellement la transition vers un courant d'entretien beaucoup plus faible qu'un courant de charge, est alors commandée par l'unité de commande 4, lorsque toutes les interfaces fournissent des signaux de mesure de courant qui sont caractéristiques du fonctionnement de leurs moyens de dérivation, cette suppression ou cette réduction étant éventuellement retardée comme montré en V sur la figure 2.

## Revendications

1. Procédé de régulation du courant fourni par un chargeur (3) aux bornes d'extrémité d'un ensemble (1) de type accumulateur électrique qui est composé d'une pluralité de cellules (2), identiquement composées chacune d'un ou de plusieurs éléments électrochimiques identiques et connectées en série par leurs bornes d'alimentation respectives, chaque cellule étant munie d'une interface individuelle (5) comportant des moyens pour mesurer la tension (V) présente entre ses bornes d'alimentation, des moyens (12, 13) pour dériver une partie (Id) du courant de charge (I) fourni à cette cellule, lorsque la tension mesurée est supérieure à une valeur de seuil (VS), ainsi que des moyens (15) pour fournir des signaux de mesure à destination d'une unité de commande (4) du chargeur,
ledit procédé étant caractérisé en ce qu'il prévoit une réduction progressive du courant de charge par l'unité de commande du chargeur à l'ensemble, lorsqu'est reçu, d'au moins l'une des interfaces, un signal de mesure de courant (i) représentatif du courant de charge (Id) dérivé au niveau de l'interface considérée, et tant que le courant de charge (I) fourni à l'ensemble est supérieur à la somme des courants (Id) susceptibles d'être dérivés par les interfaces,
le courant de charge (I) étant ensuite maintenu à la même intensité jusqu'à réception de signaux de mesure de courant traduisant un fonctionnement des moyens de dérivation pour toutes les interfaces de cellules de l'ensemble.

2. Agencement associant, au moins temporairement, un chargeur (3) à un ensemble (1) de type accumulateur électrique, composé d'une pluralité de cellules électrochimiques (2) identiques connectées en série par leurs bornes d'alimentations (+, -) respectives, aux bornes d'extrémité (A, B) duquel ce chargeur se raccorde, chaque cellule de l'ensemble étant munie d'une interface individuelle (5) qui comporte des moyens (7 à 11) pour mesurer la tension (V) présente entre ses bornes d'alimentation, des moyens (12, 13) pour dériver une partie du courant de charge fourni à la cellule, lorsque la tension (V) mesurée est supérieure à une valeur de seuil (VS), ainsi que des moyens (15) pour fournir des signaux de mesure à destination d'une unité de commande (4) du chargeur, ledit agencement étant caractérisé en ce que les moyens fournisseurs de signaux de mesure de chaque interface transmettent un signal en courant (i) représentatif du courant de charge (Id) dérivé au niveau de l'interface considérée.

3. Agencement selon la revendication 2, caractérisé en ce qu'il comporte des moyens d'horloge (16) permettant d'activer successivement et périodiquement les moyens (15) fournisseurs de signaux de mesure de chacune des interfaces et en ce que ces moyens fournissent leurs signaux de mesure de courant respectifs à un même transducteur (14) servant d'interface vis-à-vis de l'unité de commande (4) du chargeur.

## Patentansprüche

1. Verfahren zur Regelung des von einem Ladegerät (3) zu den Endanschlüssen eines Systems (1) vom Typ eines elektrischen Akkumulators, der aus einer Vielzahl von Zellen (2) besteht, die jeweils aus einer oder mehreren elektrochemischen Elementen bestehen, die gleich und durch ihre jeweiligen Versorgungsanschlüsse in Reihe verbunden sind, gelieferten Stroms, wobei jede Zelle mit einer individuellen Schnittstelle (5) versehen ist, die Mittel zum Messen der zwischen ihren Versorgungsanschlüssen vorhandenen Spannung (V), Mittel (12, 13) zum Abzweigen eines Teils (Id) des zu dieser Zelle gelieferten Ladestroms (I), wenn die gemessene Spannung über einem Schwellenwert (VS) liegt, sowie Mittel (15) zum Liefern von Meßsignalen an eine Steuereinheit (4) des Ladegeräts aufweist,
**dadurch gekennzeichnet,** daß es eine fortschreitende Verringerung des Ladestroms durch die Steuereinheit des Ladegeräts zum System vorsieht, wenn von wenigstens einer der Schnittstellen ein Strommeßsignal (i), das den an der betrachteten Schnittstelle abgezweigten Ladestrom (Id) darstellt, empfangen wird und solange der zum System gelieferte Ladestrom (I) größer als die Summe der Ströme (Id) ist, die fähig durch die Schnittstellen abgezweigt werden können,
wobei der Ladestrom (I) danach bis zum Empfang eines Strommeßsignals, das eine Tätigkeit der Abzweigrungsmittel für alle Schnittstellen der Zellen des Systems ausdrückt, auf derselben Stromstärke gehalten wird.

2. Vorrichtung, die wenigstens zeitweise ein Ladegerät (3) mit einem System (1) vom Typ eines elektrischen Akkumulators verbindet, der aus einer Vielzahl von gleichen elektrochemischen Zellen (2) besteht, die durch ihre jeweiligen Versorgungsanschlüsse (+, -) in Reihe mit Endanschlüssen (A, B) verbunden sind, an welche dieses Ladegerät angeschlossen wird, wobei jede Zelle des Systems mit einer individuellen Schnittstelle (5) versehen ist, die Mittel (7 bis 11) zum Messen der zwischen ihren Versorgungsanschlüssen vorhandenen Spannung (V), Mittel (12, 13) zum Abzweigen eines Teils des zur Zelle gelieferten Ladestroms, wenn die gemessene Spannung (V) über einem Schwellenwert (VS) liegt, sowie Mittel (15) zum Liefern von Meßsignalen an eine Steuereinheit (4) des Ladegeräts aufweist, dadurch gekennzeichnet, daß die Liefermittel für das Meßsignal jeder Schnittstelle ein Stromsignal (i) übertragen, das den an der betrachteten Schnittstelle abgezweigten Ladestrom (Id) darstellt.

3. Vorrichtung nach Anspruch 2, dadurch gekennzeichnet, daß sie Zeitgebermittel (16) aufweist, die gestatten, die Liefermittel (15) für das Meßsignal jeder der Schnittstellen nacheinander und periodisch zu aktivieren, und daß diese Liefermittel ihre jeweiligen Strommeßsignale zum selben Wandler (14) liefern, der als Schnittstelle gegenüber der Steuereinheit (4) des Ladegeräts dient.

## Claims

1. A method of regulating the current supplied by a charger (3) to the end terminals of a set (1) of electrical storage cells, which set is made up of a plurality of units (2), each of which is identically made up of one or more identical electrochemical cells, the units being connected together in series via their respective power supply terminals, each unit being provided with an individual interface (5) including measurement means for measuring the voltage (V) across its power supply terminals. means (12, 13) for diverting a portion (Id) of the charging current (I) supplied to the unit, when the measured voltage is greater than a threshold value (VS), and means (15) for supplying measurement signals to a controller (4) of the charger,
said method being characterized in that provision is made for the controller to reduce progressively the charging current supplied by the charger to the set, when a current measurement signal (i) is received from at least one of the interfaces, which current measurement signal is representative of charging current (Id) diverted at the interface in question, and to do so so long as the charging current (I) supplied to the set is greater than the sum of the currents (I) that can be diverted by the interfaces,
the charging current (I) then being maintained at the same level until current measurement signals are received that express the fact that the diversion means for all of interfaces of the units of the set are operating.

2. A facility associating, at least temporarily, a charger (3) with a set (1) of electrical storage cells, which set is made up of a plurality of identical electrochemical units (2) connected together in series via their respective power supply terminals (+, -), the charger being connected to the end terminals (A, B) of the set, each unit of the set being provided with an individual interface (5) which includes means (7 to 11) for measuring the voltage (V) across its power supply terminals, means (12, 13) for diverting a portion of the charging current supplied to the cell, when the measured voltage (V) is greater than a threshold value (VS), and means (15) for supplying measurement signals to a controller (4) of the charger, said facility being characterized in that the means for supplying measurement signals from each interface transmit a current signal (i) representative of the charging current (Id) diverted at the interface in question.

3. A facility according to claim 2, characterized in that it includes clock means (16) making it possible to activate successively and periodically the means (15) for supplying measurement signals from each of the interfaces, and in that these means supply their respective current measurement signals to a common transducer (14) serving as an interface relative to the controller (4) of the charger.
